# EUROPÄISCHE PATENTSCHRIFT

(11) **EP 3 963 694 B1**
(45) Veröffentlichungstag und Bekanntmachung des Hinweises auf die Patenterteilung: **10.12.2025**
(21) Anmeldenummer: 20721402.4
(22) Anmeldetag: 09.04.2020
(51) Int. Cl.: H02K 3/52, H02K 3/50

(54) **VERFAHREN ZUR HERSTELLUNG EINES STATORS**
METHOD FOR PRODUCING A STATOR
PROCÉDÉ DE FABRICATION D'UN STATOR

(30) Priorität: 02.05.2019 DE 102019111340
(43) Veröffentlichungstag der Anmeldung: 09.03.2022
(73) Patentinhaber: Schaeffler Technologies AG & Co. KG, 91074 Herzogenaurach (DE)
(72) Erfinder: LEHNER, Valentin, 76137 Karlsruhe (DE)
(74) Vertreter: Schaeffler Technologies
(86) Internationale Anmeldenummer: PCT/DE2020/100290
(87) Internationale Veröffentlichungsnummer: WO 2020/221393

(56) Entgegenhaltungen:
- DE-A1- 10 328 720
- DE-A1- 102015 209 225
- US-A1- 2012 098 363

## Beschreibung

Die Erfindung betrifft ein Verfahren zur Herstellung eines Stators für einen Elektromotor.

Die deutsche Offenlegungsschrift DE 10 2016 204 935 A1 offenbart eine Verschaltungsplatte eines Stators einer elektrischen Maschine. Mittels der Verschaltungsplatte werden elektrische Wicklungen des Stators mit einem VerbindungsStecker für die Stromversorgung kontaktiert. Die Verschaltungsplatte weist Leiterelemente auf, die in Umfangsrichtung verlaufende, die Wicklungen verbindende Verbindungsabschnitte mit abgeflachten Querschnitten aufweisen. Die Verbindungsabschnitte sind mit einem ringförmigen Kunststoffkörper umspritzt, der die Leiterelemente gegeneinander isoliert.

In der deutschen Offenlegungsschrift DE 10 2016 210 927 A1 ist ein Stator für eine elektrische Maschine offenbart, der an einer Stirnseite eines Blechpakets ringförmig angeordnete Wicklungsköpfe elektrischer Wicklungen aufweist. Eine Verschaltungseinheit dient zum elektrischen Verbinden von Wicklungsenden der Wicklungen mit den elektrischen Phasenleitern einer Spannungsquelle. Die Verschaltungseinheit weist einen Trägerring aus einem elektrisch isolierenden Material auf, welcher mittels Fixiermitteln radial außenliegend um die Wicklungsköpfe angeordnet ist. Durch den Trägerring wird ein jeweiliges elektrisch leitfähiges Anschlusselement zum Anschließen einer der Phasenleiter gehalten.

Die deutsche Offenlegungsschrift DE 10 2016 222 611 A1 offenbart eine Vorrichtung zur Verschaltung der Verdrahtung eines Stators einer elektrischen Maschine. Die Vorrichtung umfasst einen Grundkörper mit einer Unterseite, wobei der Grundkörper mit der Unterseite auf einen Stator aufsetzbar ist. Der Grundkörper besitzt mindestens ein Positionierungsmittel zur Positionierung mindestens eines elektrischen Leiters einer Verdrahtung des Stators. Das Positionierungsmittel weist eine Einführöffnung auf. Die Einführöffnung ist an der Unterseite des Grundkörpers angeordnet, sodass der mindestens eine elektrische Leiter beim Aufsetzen der Vorrichtung auf den Stator durch die Einführöffnung in das Positionierungsmittel eingeführt wird. Das Positionierungsmittel weist einen Führungsabschnitt und einen Verschaltungsabschnitt auf, wobei das Positionierungsmittel derart ausgebildet ist, dass der mindestens eine elektrische Leiter beim Aufsetzen des Grundkörpers auf den Stator mittels des Führungsabschnitts in den Verschaltungsabschnitt geführt wird.

Die deutsche Offenlegungsschrift DE 10 2016 224 526 A1 offenbart einen Stator einer elektrischen Maschine, der aus einem Statorblechpaket besteht. Jede Phase umfasst mindestens eine Spule, die ein erstes und ein zweites Spulenende aufweist. Zur Kontaktierung ist eine Kontakteinrichtung stirnseitig auf das Statorblechpaket aufgesetzt. Ein Verlegeelement und ein auf dieses aufgesetztes Verschaltungselement dienen zur Verschaltung der Spulenenden mit Phasenanschlüssen an einer Statorstirnseite. Die Spulenenden ragen senkrecht durch Durchführöffnungen des Verlegeelements hindurch und sind jeweils radial abgewinkelt entlang einer Führungsnut des Verlegeelements geführt. Die Führungsnuten weisen in Axialrichtung jeweils eine Engstelle auf, welche das jeweils in der Führungsnut geführte Spulenende gegen ein axiales Herausgleiten sichert.

In der deutschen Offenlegungsschrift DE 10 2017 216 084 A1 ist ein Stator für eine elektrische Maschine offenbart, der einen Statorgrundkörper und radiale Statorzähne zur Aufnahme von Spulen einer elektrischen Wicklung aufweist. Auf einer Stirnseite des Statorgrundkörpers ist eine Isolierlamelle mit Aufnahmetaschen für Schneid-Klemm-Elemente vorgesehen. Die Spulen, die mittels eines Wicklungsdrahts gewickelt sind, sind in die Aufnahmetaschen eingelegt. Eine Verschalteplatte weist ringfömige Leiter auf, an denen jeweils mehrere Schneid-Klemm-Elemente angeordnet sind, die in die Aufnahmetaschen axial eingreifen, um den Wicklungsdraht elektrisch zu kontaktieren. Die Verschalteplatte ist aus Kunststoff gefertigt.

Die deutsche Gebrauchsmusterschrift DE 20 2014 003 844 U1 offenbart eine Verschaltungsanordnung, die mindestens drei Kupferprofile umfasst. Die Kupferprofile sind jeweils um eine Biegeachse zu einem Ring gebogen. Die Kupferprofile sind mit einer Lackschicht isoliert, welche an vorbestimmten Stellen entfernt ist. An diesen Stellen sind voneinander beabstandete Anschlussbereiche mit mindestens einer ebenen Fläche zur Kontaktierung von Enden von Spulendrähten ausgebildet.

Die deutsche Gebrauchsmusterschrift DE 20 2014 010 565 U1 offenbart einen Stator eines Elektromotors mit einer mehrphasigen, insbesondere dreiphasigen, Statorwicklung. Die Spulen sind mit einer stirnseitig angeordneten kreisbogenförmigen Verschaltungseinheit versehen, wobei die Verschaltungseinheit eine zweite Anzahl von Stromschienen mit jeweils einer dritten Anzahl von Wickel- und/oder Kontaktelementen für die Spulen aufweist. Die Wickel- und/oder Kontaktelemente sind als separate Stanzelemente mit einem Stanzstreifen unter Bildung der jeweiligen Stromschiene gefügt.

Für die Herstellung der Wicklungen werden Wellen- und Hairpinwicklungen aus einzelnen Drahtsträngen aus Isolationslackdraht (Kupfer oder auch Aluminiumlegierungen) über Wicklungsschablonen, oder auch frei, vorgebogen und anschließend in das Statorblechpaket des Elektromotors eingefügt. Die einzelnen Stränge werden anschließend je nach Anzahl der Phasen (2 oder mehr) des E-Motors im Sinn des Stromflusses zur Erzeugung des Stator-Drehfeldes mit den einzelnen Phasen sowie dem Sternpunkt (Sternleiter) und auch untereinander verschaltet. Die Verschaltungsreihenfolge, die Anzahl der Wicklungsdrähte und weitere Parameter, wie beispielsweise die Drahtstärke, die Anzahl der Statornuten und die Polpaarzahl, sind abhängig von der Auslegung des E-Motors. Die einzelnen Wicklungsdrähte werden entsprechend der Verschaltungsreihenfolge mit den Phasen (Stromzufuhr über beispielsweise Leiterschienen), dem Sternleiter und untereinander mit Verbindungselementen verbunden, beispielsweise geschweißt. Die jeweiligen Verbindungen für die Verschaltung werden beispielsweise einzeln in mehreren Arbeitsschritten verschweißt, gelötet oder ähnliches.

Aufgabe der Erfindung ist es daher, ein Verfahren zur Herstellung eines Stators für einen Elektromotor bereitzustellen, bei dem die Herstellungskosten, der Herstellungsprozess, sowie der Entwicklungsaufwand für den Stator verringert werden. Dabei soll ein voll automatisierter Herstellungsprozess mit möglichst geringen Arbeitsschritten durchgeführt werden. Gleichzeitig soll dieser Herstellungsprozess, die Ausführung der Verschaltung und die Ausgestaltung der Fertigungsanlagen auf unterschiedliche E-Motoren (-Größen) skaliert werden können.

Diese Aufgabe wird gelöst durch ein Verfahren zur Herstellung eines Stators für einen Elektromotor, das die Merkmale des Anspruchs 1 umfasst.

Ein durch das erfindungsgemäße Verfahren hergestellter Stator für einen Elektromotor umfasst einen Wicklungskopf einer Statorwicklung, der eine Vielzahl von Wicklungsenden aufweist. Ein Verschaltungselement umfasst mehrere Stromschienen und eine Sternschiene. Von den Stromschienen stehen in axialer Richtung des Stators mehrere Kontaktstellen der Stromschienen sowie Kontaktstellen der Sternschiene ab. Das Verschaltungselement umgibt die Wicklungsenden des Wicklungskopfes. Ein Biegekamm ist auf dem Verschaltungselement positioniert. Über den Biegekamm sind die Wicklungsenden zu den Kontaktstellen des Verschaltungselements gebogen. Die Wicklungsenden kontaktieren dabei die Kontaktstellen elektrisch.

Die Ausgestaltung des Stators ist von Vorteil, da dadurch die Herstellungskosten, der Herstellungsprozess, sowie der Entwicklungsaufwand für einen Stator verringert werden. Speziell für Statoren mit besonders effizienten Wicklungstechnologien, wie beispielsweise der Wellenwicklungen und der Hairpinwicklungen, ermöglicht der erfindungsgemäße Stator einen voll skalierbaren und automatisierten Herstellungsprozess. Ferner ist der minimale axiale Aufbau des Stators von Vorteil.

Die mehreren Stromschienen und die Sternschiene des Verschaltungselements sind zur elektrischen Isolation mit einem isolierenden Material umspritzt. Die Kontaktstellen der einzelnen Stromschienen überragen das isolierende Material in axialer Richtung. Durch die Umspritzung erreicht man in vorteilhafter Weise eine Reduktion von Lagetoleranzen der Stromschienen und der Sternschiene untereinander.

Mindestens ein Paar von Zentrierstiften ist am Verschaltungselement ausgebildet. An den Zentrierstiften kann der entsprechende Biegekamm mittels ausgebildeter Durchbrüche am Verschaltungselement fixiert werden.

Die Wicklungsenden sind für eine dauerhaft elektrische Verbindung mit den Kontaktstellen verschweißt, verklemmt oder gelötet.

Ein Aufsatz sitzt auf dem Biegekamm. Im Aufsatz ist ein Isolationsmaterial vorgesehen, um eine elektrische Isolation der mit den Kontaktstellen elektrisch verbundenen Wicklungsenden zu erreichen. Der auf dem Verschaltungselement nach dem Verguss verbleibende Biegekamm mit Aufsatz hat den Vorteil, dass eine elektrische Isolation der Kontaktstellen und der Wicklungsenden erreicht wird.

Die Wicklungsenden sind für eine dauerhaft elektrische Verbindung mit den Kontaktstellen verschweißt oder verklemmt oder gelötet.

Ein Aufsatz sitzt auf dem Biegekamm und umschließt ein Isolationsmaterial, das eine elektrische Isolation zwischen den Kontaktstellen und den mit ihnen elektrisch verbundenen Wicklungsenden ermöglicht. Der Biegekamm und der Aufsatz verbleiben nach dem Verguss mit Isolationsmaterial am Stator.

Das erfindungsgemäße Verfahren zur Herstellung eines Stators für einen Elektromotor ist definiert durch Anspruch 1 und weist den Schritt auf, dass ein Verschaltungselement auf den Stator derart aufgesetzt und positioniert wird, dass das Verschaltungselement eine Vielzahl von Wicklungsenden am Wicklungskopf der Statorwicklung des Stators umgibt. Das Verschaltungselement selbst umfasst mehrere Stromschienen und eine Sternschiene, von denen in axialer Richtung des Stators mehrere Kontaktstellen der Stromschienen sowie mehrere Kontaktstellen der Sternschiene abstehen. Über einen Biegekamm, der auf dem Verschaltungselement positioniert ist, werden die Wicklungsenden zu den Kontaktstellen der Stromschienen bzw. zu den Kontaktstellen der Sternschiene des Verschaltungselements gebogen. Die Kontaktstellen der Stromschienen bzw. die Kontaktstellen der Sternschiene werden dadurch elektrisch kontaktiert. Ein Biegekamm wird auf dem Verschaltungselement positioniert. Die Wicklungsenden werden über den Biegekamm gebogen und mit Kontaktstellen von den Stromschienen und den Kontaktstellen der Sternschiene des Verschaltungselements elektrisch kontaktiert. Ein Aufsatz wird auf den Biegekamm aufgesetzt, in den ein Isolationsmaterial eingebracht wird, damit eine elektrische Isolation zwischen den Kontaktstellen und den elektrisch verbundenen Wicklungsenden erzielt wird.

Das erfindungsgemäße Verfahren hat den Vorteil, dass ein skalierbarer, einheitlicher Fertigungsablauf und Fertigungsanlagen möglich sind. Ebenso kann eine Vollautomatisierung der Fertigung erreicht werden, wobei die Montageschritte verringert werden. Dies führt wiederum zu einer Reduzierung der Fehler bei der Fertigung.

Erfindungsgemäß wird eine gleichzeitige Biegung aller Wicklungsenden über den Biegekamm mit einer Einrichtung durchgeführt. Die Einrichtung verfügt über mehrere Rollen, die von innen in radialer Richtung nach außen über den Biegekamm gefahren werden. Dabei werden die Wicklungsenden entlang eines Biegeradius und in Nuten umgelegt. Neben der Ausführung der Biegung der Wicklungsenden dient der Biegekamm auch als Isolation von den Schweißstellen (Kontaktstellen) zum Wicklungskopf und bleibt somit als Bauteil am Stator bzw. Elektromotor.

Die umgebogenen Wicklungsenden des Wicklungskopfes der Statorwicklung werden mit den Kontaktstellen des Verschaltungselements verschweißt, verklemmt oder gelötet, um eine dauerhafte elektrische Verbindung bereitzustellen.

Jeder Biegerahmen kann automatisiert auf das Verschaltungselement aufgesetzt und positioniert werden. Hierzu hat das Verschaltungselement mehrere Zentrierstifte ausgeformt, die in am Biegekamm ausgebildete Durchbrüche greifen.

Ein Aufsatz wird auf den Biegekamm aufgesetzt. In den Aufsatz und den Biegekamm wird ein Isolationsmaterial verbracht, um eine elektrische Isolation der mit den Kontaktstellen elektrisch verbundenen Wicklungsenden zu erreichen.

Gemäß der Erfindung kann folgender voll automatisierter Fertigungsprozess für die Kontaktierung und Isolation der Kontaktstellen der Stromschienen und der Sternschiene mit den Wicklungsenden des Wicklungskopfs des Stators definiert werden. Zunächst erfolgt das Aufsetzen und Positionieren des Verschaltungselements auf den Wicklungskopf des Stators. Das Verschaltungselement kann z.B. mit dem Wicklungskopf des Stators verklebt werden. Anschließend erfolgt das Aufsetzen des Biegekamms auf das Verschaltungselement. Mit einer speziell ausgestalteten Einrichtung erfolgt ein gleichzeitiges Umbiegen aller Wicklungsenden (Drähte) über den Biegekamm. Die Einrichtung ist als Rollenwerkzeug ausgestaltet.

Die Verbindung der Kontaktstellen mit den jeweiligen Wicklungsenden kann z.B. radial von außen durch Laserverschweißung der einzelnen Kontaktstellen erfolgen. Vor dem Einsetzen des Aufsatzes (Vergussrahmen) wird eine Kontaktprüfung aller Schweißstellen an den Kontaktstellen durchgeführt. Letztendlich wird ein Isolationsmaterial in den Aufsatz und damit in den Biegerahmen eingefüllt, so dass dadurch ein Isolationsverguss aller Schweißstellen (Kontaktstellen) und der Wicklungsenden erreicht wird.

Das Isolationsmaterial kann ein Kunstharz oder ein Silikon sein, um somit eine ganzheitliche Isolation zwischen den abgewinkelten Wicklungsenden (Drähten) sicherzustellen. Diese Isolation ermöglicht eine erhebliche Verringerung der Luft- und Kriechstrecken und reduziert folglich weiter den Bauraum des Stators. Um zu verhindern, dass das flüssige Isolationsmaterial beim Eingießen zwischen den Rippen des Biegekamms abläuft, ist der Aufsatz (Vergussrahmen) in diesem Bereich als Negativform des Biegekamms ausgeführt. Für die Positionierung des Aufsatzes bei der Montage dienen wie bei dem Biegekamm die vorgesehenen Zentrierstifte.

Anhand der beigefügten Zeichnungen werden nun die Erfindung und ihre Vorteile durch Ausführungsbeispiele näher erläutert, ohne dadurch die Erfindung auf das gezeigte Ausführungsbeispiel zu beschränken. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- Figur 1: zeigt eine perspektivische Ansicht eines Verschaltungselements für die Wicklungsenden eines Stators.
- Figur 2: zeigt eine perspektivische Ansicht des grundsätzlichen Aufbaus der Verschaltung des Stators mit Verschaltungselement, wobei das Verschaltungselement nicht vergossen ist.
- Figur 3: zeigt eine perspektivische Ansicht des grundsätzlichen Aufbaus der Verschaltung des Stators mit Verschaltungselement, wobei das Verschaltungselement vergossen ist.
- Figur 4: zeigt eine perspektivische Detailansicht der Verschaltung der Wicklungsenden des Stators mit dem Verschaltungselement, wobei das Verschaltungselement nicht vergossen ist.
- Figur 5: zeigt eine perspektivische Detailansicht der Verschaltung der Wicklungsenden des Stators mit dem Verschaltungselement, wobei das Verschaltungselement vergossen ist.
- Figur 6: zeigt eine Schnittansicht des Verschaltungselements in Verbindung mit dem Wicklungskopf des Stators und der erstellten Kontaktierung.
- Figur 7: zeigt eine perspektivische Ansicht eines Biegekamms zur Herstellung eines elektrischen Kontakts zwischen den Wicklungsenden und den Kontaktstellen des Verschaltungselements.
- Figur 8: zeigt eine vergrößerte Ansicht des Verschaltungselements mit dem verwendeten Biegekamm.
- Figur 9: zeigt eine vergrößerte Detailansicht des Biegekamms.
- Figur 10: zeigt eine vergrößerte Detailansicht des Endes des Biegekamms.
- Figur 11: zeigt eine schematische Ansicht des mit dem Wicklungskopf verbundenen Verschaltungselements und die schematische Darstellung eines Werkzeugs zum Umlegen der Wicklungsenden.
- Figur 12: zeigt eine schematische Seitenansicht der Einrichtung zum Umlegen der Wicklungsenden des Wicklungskopfes des Stators.
- Figur 13: zeigt eine perspektivische Ansicht eines Aufsatzes zum Vergießen der betriebsfertigen Wicklungsenden.
- Figur 14: zeigt eine perspektivische Ansicht des Aufsatzes, der den zu vergießenden Bereich des Verschaltungselements umgibt.
- Figur 15: zeigt eine vergrößerte Teilansicht des Aufsatzes auf dem Verschaltungselement.
- Figur 16: zeigt eine perspektivische Ansicht des Aufsatzes in dem bereits ein Vergussmittel eingefüllt ist.
- Figur 17: zeigt eine vergrößerte Teilansicht des Aufsatzes auf dem Verschaltungselement mit dem eingefüllten Vergussmittel.
- Figur 18: zeigt eine perspektivische Ansicht der einzelnen Elemente, die für eine elektrische Verschaltung der Wicklungsenden am Wicklungskopf erforderlich sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken.

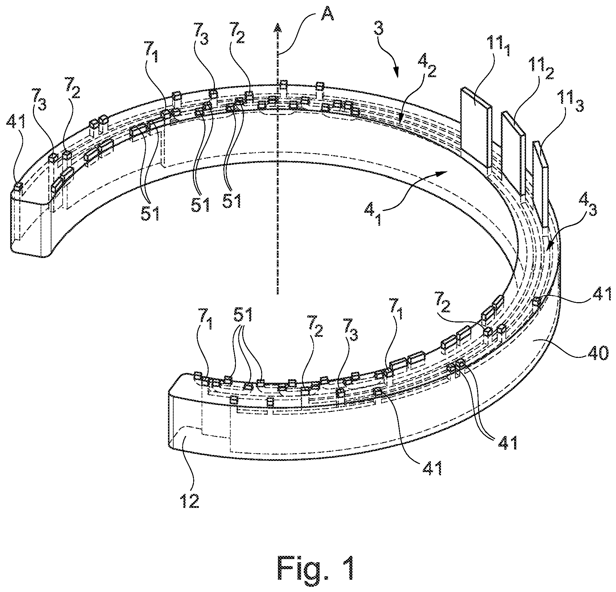

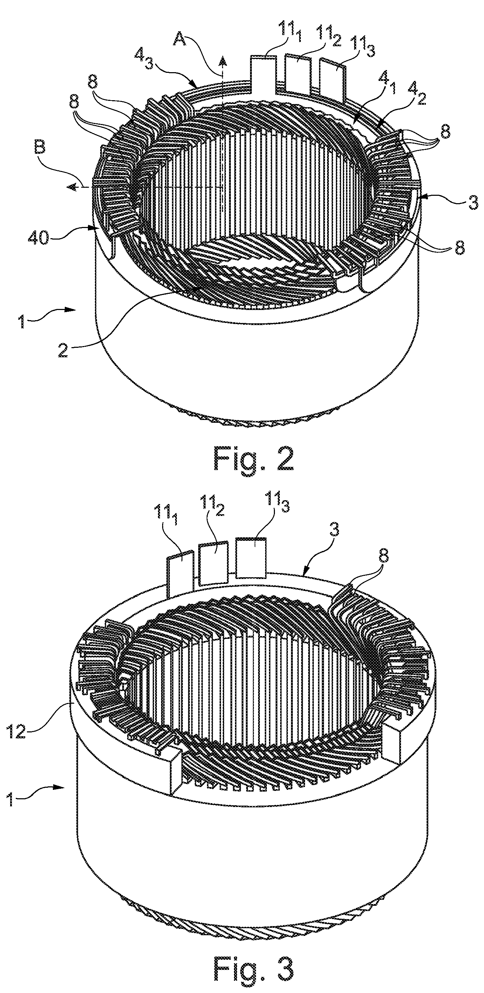

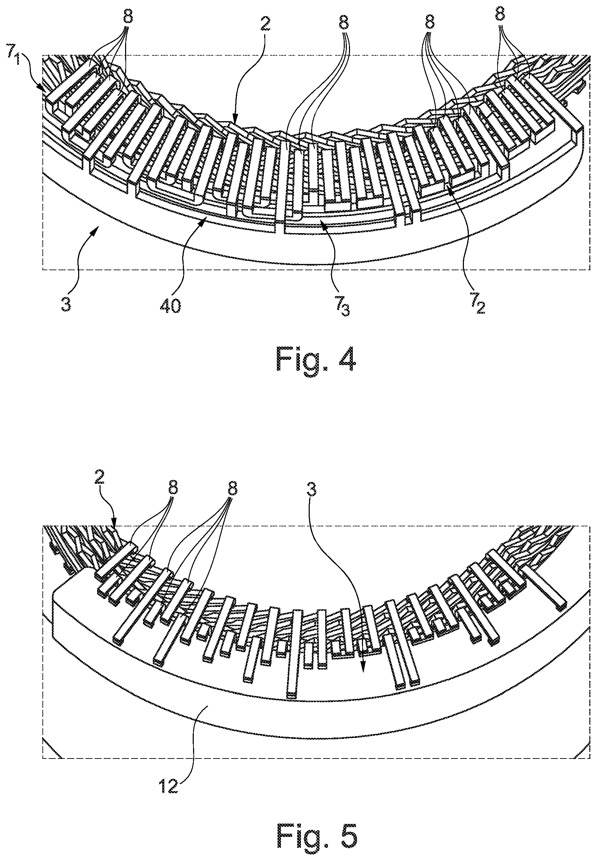

Figur 1 zeigt eine perspektivische Ansicht eines Verschaltungselements 3 für Wicklungsenden 8 (siehe Fig. 4 oder 5) am Wicklungskopf 2 (siehe Fig. 2) eines Stators 1. Das Verschaltungselement 3 umfasst mehrere Stromschienen 4₁, 4₂ und 4₃ und eine Sternschiene 40. Die mehreren Stromschienen 4₁, 4₂ und 4₃ und die Sternschiene 40 des Verschaltungselements 3 sind mit einem Isolationsmaterial 12 umspritzt. Die mehreren Stromschienen 4₁, 4₂ und 4₃ und die Sternschiene 40 sind z.B. mit Kunststoff als Isolationsmaterial 12 umspritzt. Dies gewährleistet eine elektrische Isolation zwischen den einzelnen Stromschienen 4₁, 4₂ und 4₃ und der Sternschiene 40 und eine feste Positionierung dieser zueinander. Die Kontaktstellen 7₁, 7₂ und 7₃ der einzelnen Stromschienen 4₁, 4₂ und 4₃, die Kontaktstellen 41 der Sternschiene 40 und die Verbindungsstellen 51 überragen das Isolationsmaterial 12 in axialer Richtung A. Die einzelnen Stromschienen 4₁, 4₂ und 4₃ (drei Phasen) haben bei der hier dargestellten Ausführungsform jeweils entsprechende Stromanschlüsse 11₁, 11₂ und 11₃, die ebenfalls in axialer Richtung A von der entsprechenden Stromschiene 4₁, 4₂ und 4₃ bzw. der Sternschiene 40 abstehen können.

Figur 2 zeigt eine perspektivische Ansicht des grundsätzlichen Aufbaus der Verschaltung des Stators 1 mit Verschaltungselement 3, wobei das Verschaltungselement 3 nicht vergossen ist. Figur 3 zeigt eine perspektivische Ansicht des grundsätzlichen Aufbaus der Verschaltung des Stators 1 mit Verschaltungselement 3, wobei das Verschaltungselement 3 vergossen ist. Bei den Darstellungen der Figur 2 und 3 sind die Vielzahl der Wicklungsenden 8 bereits auf die Kontaktstellen 7₁, 7₂ und 7₃ (siehe Fig. 1) der einzelnen Stromschienen 4₁, 4₂ und 4₃ und die Kontaktstellen 41(siehe Fig. 1) der Sternschiene 40 in die Endposition gebogen und kontaktieren somit die Kontaktstellen 7₁, 7₂ und 7₃ bzw. 41. Durch das Abwinkeln der Wicklungsenden 8 am Wicklungskopf 2 in radialer Richtung B (nach außen), kann ein geringer Aufbau in axialer Richtung A der Verschaltung der Wicklungsenden 8 erreicht werden. Bei dem vergossenen Verschaltungselement 3 sind die Stromschienen 4₁, 4₂ und 4₃ und die Sternschiene 40 vollkommen im Isolationsmaterial 12 eingebettet. Das Verschaltungselement 3 sitzt am Wicklungskopf 2 des Stators 1. Lediglich die Stromanschlüsse 11₁, 11₂ und 11₃ für die einzelnen Stromschienen 4₁, 4₂ und 4₃ sind zugänglich. Ebenso erkennt man die auf die Kontaktstellen 7₁, 7₂ und 7₃ (siehe Fig. 1) der einzelnen Stromschienen 4₁, 4₂ und 4₃ und die auf die Kontaktstellen 41 (siehe Fig. 1) der Sternschiene 40 gebogenen Wicklungsenden 8.

Figur 4 zeigt eine perspektivische Detailansicht der Verschaltung der Wicklungsenden 8 des Stators 1 am Verschaltungselement 3, wobei das Verschaltungselement 3 nicht vergossen ist. Figur 5 zeigt eine perspektivische Detailansicht der Verschaltung der Wicklungsenden 8 des Stators 1 mit Verschaltungselement 3, wobei das Verschaltungselement 3 vergossen ist. Bei den detaillierten Darstellungen der Figur 4 und 5 sind die Vielzahl der Wicklungsenden 8 bereits auf die Kontaktstellen 7₁, 7₂ und 7₃ (siehe Fig. 1) der einzelnen Stromschienen 4₁, 4₂ und 4₃ und die Kontaktstellen 41 (siehe Fig. 1) der Sternschiene 40 in die Endposition gebogen und kontaktieren somit die Kontaktstellen 7₁, 7₂ und 7₃ bzw. 41. Bei dem mit dem Isolationsmaterial 12 ummantelten Verschaltungselement 3 sind nur noch die umgebogenen Wicklungsenden 8 zu erkennen, die die Kontaktstellen 7₁, 7₂ und 7₃ (siehe Fig. 1) der einzelnen Stromschienen 4₁, 4₂ und 4₃, die Kontaktstellen 41 (siehe Fig. 1) der Sternschiene 40 und die Verbindungsstelle 51 (siehe Fig. 1) kontaktieren.

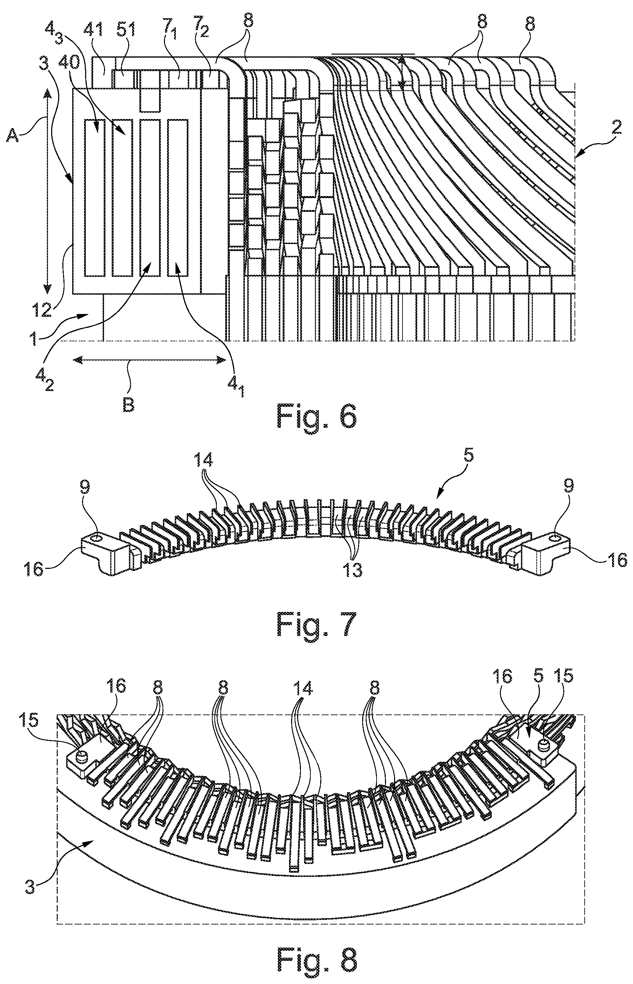

Figur 6 zeigt eine Schnittansicht des Verschaltungselements 3 in Verbindung mit dem Wicklungskopf 2 des Stators 1 und der erstellten Kontaktierung. Die Wicklungsenden 8 sind bereits in Endposition auf die Kontaktstellen 7₁, 7₂ und 7₃, die Kontaktstellen 41 und die Verbindungsstellen 51 gebogen und kontaktieren diese elektrisch. Durch das Abwinkeln der Wicklungsenden 8 in radialer Richtung B nach außen, kann ein geringer Aufbau in axialer Richtung A der Verschaltung erreicht werden. Gemäß der Erfindung ist eine variable Skalierung (axial/radial) durch Anpassung der Stromschienen 4₁, 4₂ und 4₃, und der Sternschiene 40 möglich. Somit bleibt der Grundaufbau der Verschaltung für die Konstruktion und Produktion stets gleich und ist zeitlich schnell umsetzbar.

Gleichzeitig kann die Verschaltung auf unterschiedliche Anforderungen und Motoren skaliert und an variierende Bauraumanforderungen angepasst werden. Die Stromschienen 4₁, 4₂ und 4₃, und die Sternschiene 40 sind von dem Isolationsmaterial 12 umgeben und somit in der Lage, zueinander fixiert und elektrisch voneinander isoliert zu sein.

Figur 7 zeigt eine perspektivische Ansicht eines Biegekamms 5 zur Herstellung des elektrischen Kontakts zwischen den Wicklungsenden 8 und den Kontaktstellen 7₁, 7₂ und 7₃, 41 und den Verbindungsstellen 51 (siehe Fig. 6). Der Biegekamm 5 hat eine Vielzahl von Nuten 13 und die Nuten 13 trennende Kammrippen 14 ausgebildet. Die freien Enden 16 des Biegekamms 5 haben jeweils einen Durchbruch 9 ausgebildet. Der Durchbruch 9 dient zur Aufnahme eines Zentrierstifts 15 (siehe Fig. 8) des Verschaltungselements 3 (siehe Fig. 8).

Figur 8 zeigt eine vergrößerte Ansicht des Verschaltungselements 3 mit dem verwendeten Biegekamm 5. Der Biegekamm 5 wird über Zentrierstifte 15 am Verschaltungselement 3 positioniert. Somit wird eine genaue Ausrichtung der Wicklungsenden 8 zum Verschaltungselement 3 erreicht. Gleichzeitig werden die Wicklungsenden 8 über die Kammrippen 14 voneinander separiert und ausgerichtet.

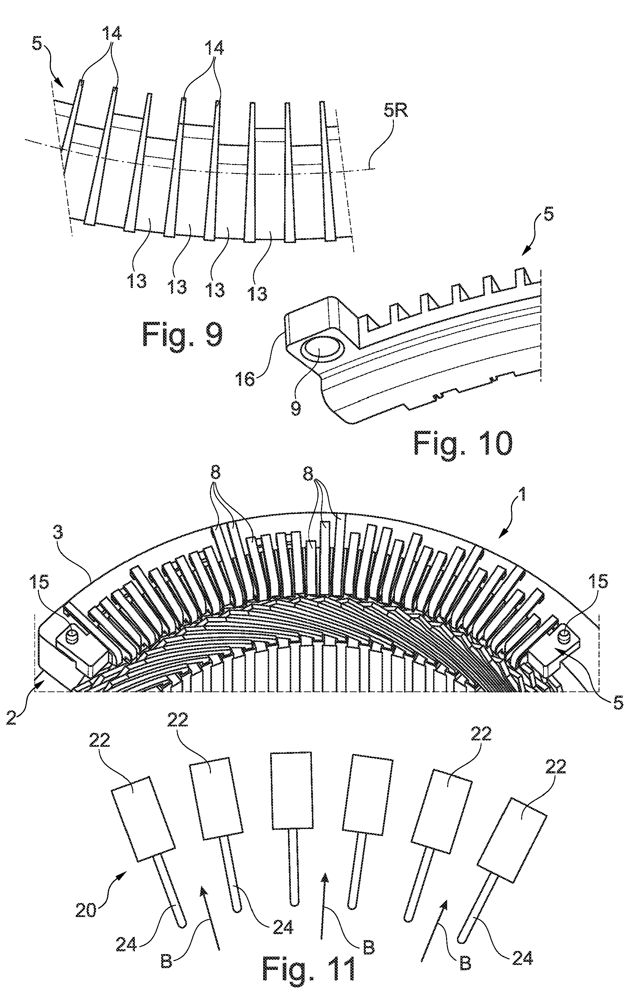

Figur 9 zeigt eine vergrößerte Detailansicht des zentralen Teils des Biegekamms 5. Die obenliegenden Nuten 13 am Biegekamm 5 sind auf einem Radius 5R angeordnet. Durch die Anordnung der Nuten 13 auf dem Radius 5R ergibt sich eine Aufspreizung der einzelnen Wicklungsenden 8 hin zu den jeweiligen Kontaktstellen 7₁, 7₂ 7₃ und 41 sowie den Verbindungsstellen 51 (siehe Fig. 6) für die Durchführung der Biegung der Wicklungsenden 8. Wie bereits in der Beschreibung zu Fig. 8 erwähnt, dienen die Kammrippen 14 zur räumlichen Trennung und elektrischen Isolation der Wicklungsenden 8 voneinander.

Figur 10 zeigt eine vergrößerte Detailansicht eines freien Endes 16 des Biegekamms 5. Am freien Ende ist der Durchbruch 9 ausgebildet, der zur lagerichtigen Positionierung des Biegekamms 5 am Verschaltungselement 3 (siehe Fig. 8.) dient. Die Montage des Biegekamms 5 am Verschaltungselement 3 wird beispielsweise automatisiert über einen Roboterarm (nicht dargestellt) vorgenommen.

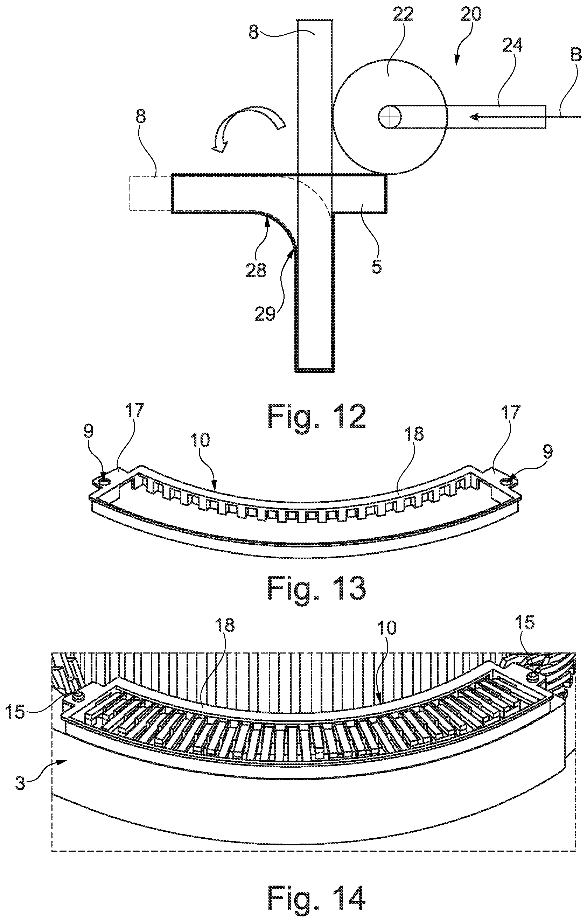

Figur 11 zeigt eine schematische Ansicht des mit dem Wicklungskopf 2 verbundenen Verschaltungselements 3 und die schematische Darstellung einer Einrichtung 20 zum Umlegen der Wicklungsenden 8. Figur 12 zeigt eine schematische Seitenansicht der Einrichtung zum Umlegen der Wicklungsenden 8 des Wicklungskopfes 2 des Stators 1. Die Einrichtung 20 verfügt über mehrere Rollen 22, die an einer Führung 24 drehbar gelagert und geführt sind. Die Rollen 22 können mit den Wicklungsenden 8 in Wirkzusammenhang gebracht werden und drücken auf die Wicklungsenden 8. Die Rollen 22 wirken in radialer Richtung B auf die Wicklungsenden 8, so dass diese um einen Biegeradius 28 einer jeweiligen Biegekante 29 einer jeden Nut 13 des Biegekamms 5 in Richtung der jeweiligen Kontaktstellen 7₁, 7₂ 7₃ und 41 sowie der Verbindungsstellen 51 (siehe Fig. 6) umgebogen werden. Die mittels der Rollen 22 durchgeführte Biegung über den Biegekamm 5 wird von innen in radialer Richtung B nach außen durchgeführt. Die Wicklungsenden 8 werden entlang des Biegeradius 28 und der Nuten 13 umgelegt (siehe Fig. 11).

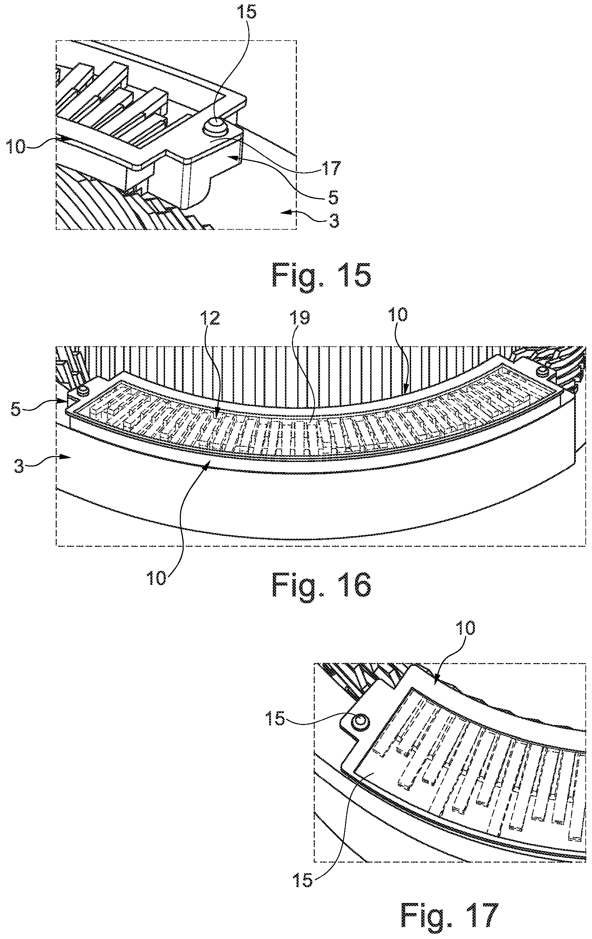

Figur 13 zeigt eine perspektivische Ansicht eines Aufsatzes 10 zum Vergießen der betriebsfertigen Wicklungsenden 8 im Biegekamm 4. Figur 14 zeigt eine perspektivische Ansicht des Aufsatzes 10, der den zu vergießenden Bereich des Biegekamms 5 auf dem Verschaltungselement 3 umgibt. In Figur 15 ist eine vergrößerte Teilansicht des Aufsatzes 10 auf dem Biegekamm 5 des Verschaltungselements 3 dargestellt. Der Aufsatz 10 definiert einen Vergussrahmen 18 der den mit einem Verguss 19 (siehe Fig. 16 oder 17) zu füllenden Bereich umgibt. An jedem freien Ende 17 hat der Vergussrahmen 18 ebenfalls einen Durchbruch 9 (Öffnung) ausgebildet, über den der Aufsatz 10 am Zentrierstift 15 des Verschaltungselements 3 montiert werden kann. Der Vergussrahmen 18 des Aufsatzes 10 hat eine Negativform des Biegekamms 5 ausgebildet, so dass ein Formschluss zwischen dem Vergussrahmen 18 des Aufsatzes 15 und dem Biegekamm 5 gegeben ist. Durch den Formschluss ist gewährleistet, dass kein Material beim Vergießen ausläuft. Wie der Fig. 14 zu entnehmen ist, wird der Aufsatz 10 durch die Zentrierstifte 15 des Verschaltungselements 3 in Beziehung zum Biegekamm 5 positioniert. Figur 15 verdeutlicht das Anbringen des Aufsatzes 10 auf den Biegekamm 5. Auch der Aufsatz 10 hat einen Durchbruch 9 am freien Ende 17 ausgebildet, über den der Aufsatz 10 in Bezug zum Biegekamm 5 positioniert werden kann.

Figur 16 zeigt eine perspektivische Ansicht des Aufsatzes 10 auf dem Biegekamm 5, in dem bereits ein Isolationsmaterial 12 als Verguss 19 eingefüllt ist. Figur 17 zeigt eine vergrößerte Teilansicht des Aufsatzes 10 auf dem Biegekamm 5, der auf dem Verschaltungselement 3 sitzt. Wie bereits in der Beschreibung zu den Fign. 14 und 15 erwähnt, wird der Aufsatz 10 ebenfalls mittels der Zentrierstifte 15 des Verschaltungselements 3 positioniert. Das in den Aufsatz 10 und dem Biegekamm 5 eingefüllte Isolationsmaterial 12 umgibt und bedeckt die Kontaktstellen 7₁, 7₂ 7₃ und 41 sowie die Verbindungsstellen 51 (siehe Fig. 6). Dadurch wird ein Schutz vor Umwelteinflüssen und eine elektrische Isolation der Kontaktstellen 7₁, 7₂ 7₃ und 41 sowie der Verbindungsstellen 51 und auch der umgebogenen Wicklungsenden 8 erreicht.

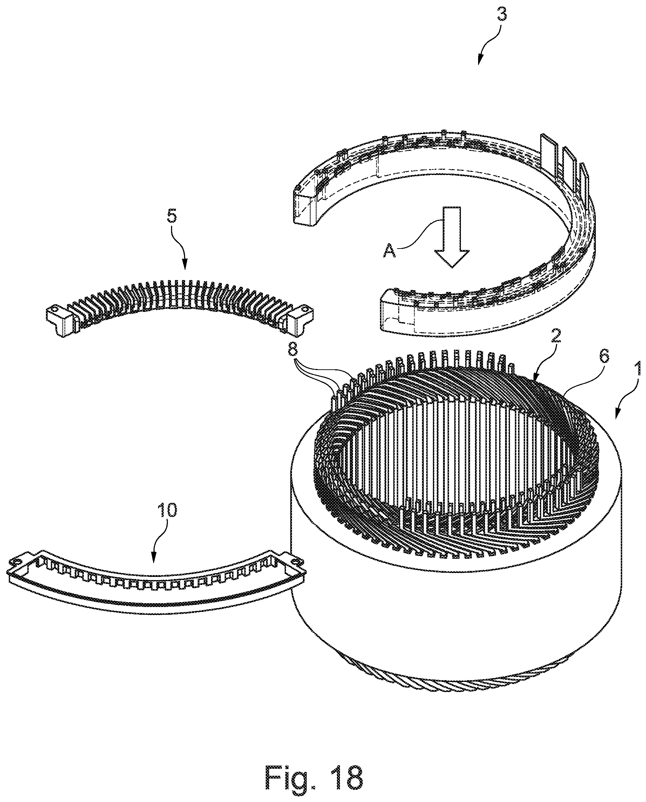

Figur 18 zeigt eine perspektivische Ansicht der einzelnen Elemente (Biegekamm 5, Aussatz 10 und Verschaltungselement 3), die für eine elektrische Verschaltung der Wicklungsenden 8 am Wicklungskopf 2 erforderlich sind. Zunächst wird das Verschaltungselement 3, das mehrere Stromschienen 4₁, 4₂, 4₃ und eine Sternschiene 40 (siehe Fig. 1) umfasst, in axialer Richtung A auf dem Wicklungskopf 2 der Statorwicklung 6 des Stators 1 positioniert. Das Verschaltungselement 3 umgibt eine Vielzahl von Wicklungsenden 8 am Wicklungskopf 2 (siehe Fig. 6). Bevor die die Kontaktstellen 7₁, 7₂ 7₃ und 41 sowie die Verbindungsstellen 51 die Wicklungsenden 8 kontaktieren, wird ein Biegekamm 5 auf dem Verschaltungselement 3 positioniert. Erst danach werden die Wicklungsenden 8 über den Biegekamm 5 gebogen, um die Kontaktstellen 7₁, 7₂ 7₃ und 41 sowie Verbindungsstellen 51 der Stromschienen 4₁, 4₂ und 4₃, des Verschaltungselements 3 elektrisch zu kontaktieren. Zum Schluss wird der Aufsatz 10 auf den Biegekamm 5 aufgesetzt. Zum Schluss wird ein Isolationsmaterial 12 in den Aufsatz 10 und den Biegekamm 5 eingebracht. Der Biegekamm 5 und der Aufsatz 10 verbleiben am Stator 1 und tragen ebenfalls zur Isolation der Kontaktstellen 7₁, 7₂ 7₃ und 41 sowie der Verbindungsstellen 51 bei. Durch das vergossene Isolationsmaterial 12 wird eine elektrische Isolation zwischen den Kontaktstellen 7₁, 7₂ 7₃ und 41 sowie der Verbindungsstellen 51 und der umgebogenen Wicklungsenden 8 erzielt.

### Bezugszeichenliste

- 1: Stator
- 2: Wicklungskopf
- 3: Verschaltungselement
- 4₁: erste Stromschiene
- 4₂: zweite Stromschiene
- 4₃: dritte Stromschiene
- 5: Biegekamm
- 5R: Radius
- 6: Statorwicklung
- 7₁: Kontaktstellen
- 7₂: Kontaktstellen
- 7₃: Kontaktstellen
- 8: Wicklungsende
- 9: Durchbruch
- 10: Aufsatz
- 11₁: Stromanschluss
- 11₂: Stromanschluss
- 11₃: Stromanschluss
- 12: Isolationsmaterial
- 13: Nut
- 14: Kammrippe
- 15: Zentrierstift
- 16: freies Ende
- 17: freies Ende
- 18: Vergussrahmen
- 19: Verguss
- 20: Einrichtung
- 22: Rolle
- 24: Führung
- 28: Biegeradius
- 29: Biegekante
- 40: Sternschiene
- 41: Kontaktstelle der Sternschiene
- 51: Verbindungsstelle
- A: axiale Richtung
- B: radiale Richtung

## Patentansprüche

1. Verfahren zur Herstellung eines Stators (1) für einen Elektromotor, mit den folgenden Schritten:
- dass ein Verschaltungselement (3), das mehrere Stromschienen (4₁, 4₂, 4₃) und eine Sternschiene (40) umfasst, von denen in axialer Richtung (A) des Stators (1) mehrere Kontaktstellen (7₁, 7₂, 7₃) der Stromschienen (4₁, 4₂, 4₃) sowie mehrere Kontaktstellen (41) der Sternschiene (40) abstehen, auf den Stator (1) derart aufgesetzt und positioniert wird, dass das Verschaltungselement (3) eine Vielzahl von Wicklungsenden (8) am Wicklungskopf (2) der Statorwicklung (6) des Stators (1) umgibt;
- dass ein Biegekamm (5) auf dem Verschaltungselement (3) positioniert wird;
- dass die Wicklungsenden (8) über den Biegekamm (5) gebogen und mit Kontaktstellen (7₁, 7₂, 7₃) der Stromschienen (4₁, 4₂, 4₃) und den Kontaktstellen (41) der Sternschiene (40) des Verschaltungselements (3) elektrisch kontaktiert werden; und
- dass ein Aufsatz (10) auf den Biegekamm (5) aufgesetzt wird, in den ein Isolationsmaterial (12) eingebracht wird, damit eine elektrische Isolation zwischen den Kontaktstellen (7₁, 7₂, 7₃) und den Kontaktstellen (41) und den elektrisch verbundenen Wicklungsenden (8) erzielt wird Wobei eine gleichzeitige Biegung aller Wicklungsenden (8) über den Biegekamm (5) mit einer Einrichtung (20) durchgeführt wird, wobei die Einrichtung (20) über mehrere Rollen (22) verfügt, die von innen in radialer Richtung (B) nach außen über den Biegekamm (5) gefahren werden, und dabei die Wicklungsenden (8) entlang eines Biegeradius (28) und in Nuten (13) umlegt.

2. Verfahren nach Anspruch 1, wobei die umgebogenen Wicklungsenden (8) des Wicklungskopfes (2) der Statorwicklung (6) mit den Kontaktstellen (7₁, 7₂, 7₃, 41) des Verschaltungselements (3) verschweißt, verklemmt oder gelötet werden, um eine dauerhafte elektrische Verbindung bereitzustellen.

3. Verfahren nach einem der vorangehenden Ansprüche 1 bis 2, wobei jeder Biegerahmen (5) automatisiert auf das Verschaltungselement (3) aufgesetzt und positioniert wird, wobei hierzu das Verschaltungselement (3) mehrere Zentrierstifte (15) ausgeformt hat, die in am Biegekamm (5) ausgebildete Durchbrüche (9) greifen.

4. Verfahren nach Anspruch 3, wobei ein Aufsatz (10) auf den Biegekamm (5) aufgesetzt und in den Aufsatz (10) ein Isolationsmaterial (12) verbracht wird, um eine elektrische Isolation der mit den Kontaktstellen (7₁, 7₂, 7₃, 41) elektrisch verbundenen Wicklungsenden (8) zu erreichen.

## Claims

1. A method for producing a stator (1) for an electric motor, having the following steps:
- placing and positioning of a switching element (3), which comprises multiple bus bars (4₁, 4₂, 4₃) and a star rail (40), from which multiple contact points (7₁, 7₂, 7₃) of the bus bars (4₁, 4₂, 4₃) and multiple contact points (41) of the star rail (40) protrude in the axial direction (A) of the stator (1), on the stator (1) in such a way that the switching element (3) surrounds a plurality of winding ends (8) on the winding head (2) of the stator winding (6) of the stator (1);
- positioning of a bending comb (5) on the switching element (3);
- bending of the winding ends (8) over the bending comb (5) and making electric contact with the contact points (7₁, 7₂, 7₃) of the bus bars (4₁, 4₂, 4₃) and the contact points (41) of the star rail (40) of the switching element (3); and
- placing of an attachment (10) on the bending comb (5), into which an insulation material (12) is introduced, so that an electrical insulation is achieved between the contact points (7₁, 7₂, 7₃) and the contact points (41) and the electrically connected winding ends (8), wherein all winding ends (8) are bent simultaneously over the bending comb (5) using a device (20), wherein the device (20) has multiple rollers (22), which are moved from the inside in a radial direction (B) outwards over the bending comb (5), and in the process folds the winding ends (8) along a bending radius (28) and into grooves (13).

2. The method according to claim 1, wherein the bent winding ends (8) of the winding head (2) of the stator winding (6) are welded, clamped or soldered to the contact points (7₁, 7₂, 7₃, 41) of the switching element (3) in order to provide a permanent electrical connection.

3. The method according to any one of the preceding claims 1 to 2, wherein each bending frame (5) is placed and positioned on the switching element (3) in an automated manner, wherein for this purpose multiple centering pins (15) are formed on the switching element (3) which engage in openings (9) formed on the bending comb (5).

4. The method according to claim 3, wherein an attachment (10) is placed on the bending comb (5) and an insulating material (12) is introduced into the attachment (10) in order to achieve an electrical insulation of the winding ends (8) electrically connected to the contact points (7₁, 7₂, 7₃, 41).

## Revendications

1. Procédé de fabrication d'un stator (1) pour un moteur électrique, comportant les étapes suivantes :
- un élément de connexion (3), qui comprend plusieurs rails conducteurs (4₁, 4₂, 4₃) et un rail en étoile (40), duquel, dans la direction axiale (A) du stator (1), plusieurs points de contact (7₁, 7₂, 7₃) des rails conducteurs (4₁, 4₂, 4₃) ainsi que plusieurs points de contact (41) du rail en étoile (40) font saillie, est monté et positionné sur le stator (1) de telle sorte que l'élément de connexion (3) entoure une pluralité d'extrémités de bobine (8) sur une tête de bobine (2) de la bobine de stator (6) du stator (1) ;
- un peigne de cintrage (5) est positionné sur l'élément de connexion (3) ;
- les extrémités de bobine (8) sont cintrées par l'intermédiaire du peigne de cintrage (5) et mises en contact électrique avec les points de contact (7₁, 7₂, 7₃) des rails conducteurs (4₁, 4₂, 4₃) et les points de contact (41) du rail en étoile (40) de l'élément de connexion (3) ; et
- un embout (10) est monté sur le peigne de cintrage (5), dans lequel est appliqué un matériau isolant (12), afin d'obtenir ainsi une isolation électrique entre les points de contact (7₁, 7₂, 7₃) et les points de contact (41) et les extrémités de bobine (8) électriquement reliées, dans lequel un cintrage simultané de toutes les extrémités de bobine (8) est réalisé par l'intermédiaire du peigne de cintrage (5) avec un dispositif (20), le dispositif (20) disposant de plusieurs rouleaux (22), qui sont déplacés de l'intérieur dans la direction radiale (B) vers l'extérieur par l'intermédiaire du peigne de cintrage (5), et qui rabat ainsi les extrémités de bobine (8) le long d'un rayon de cintrage (28) et dans des rainures (13).

2. Procédé selon la revendication 1, dans lequel les extrémités de bobine (8) cintrées de la tête de bobine (2) de la bobine de stator (6) sont soudées, serties ou brasées avec les points de contact (7₁, 7₂, 7₃, 41) de l'élément de connexion (3), afin de préparer une liaison électrique permanente.

3. Procédé selon l'une des revendications précédentes 1 à 2, dans lequel chaque cadre de cintrage (5) est monté et positionné de manière automatisée sur l'élément de connexion (3), dans lequel dans ce but l'élément de connexion (3) comporte plusieurs goupilles de centrage (15), qui viennent en prise sur des ouvertures (9) réalisées sur le peigne de cintrage (5).

4. Procédé selon la revendication 3, dans lequel un embout (10) est monté sur le peigne de cintrage (5) et, dans l'embout (10), est appliqué un matériau isolant (12) permettant d'assurer une isolation électrique des extrémités de bobine (8) reliées électriquement aux points de contact (7₁, 7₂, 7₃, 41).
